# EUROPÄISCHE PATENTANMELDUNG

(11) **EP 2 273 328 A1**
(43) Veröffentlichungstag der Anmeldung: **12.01.2011**
(21) Anmeldenummer: 09163414.7
(22) Anmeldetag: 22.06.2009
(51) Int. Cl.: G05B 19/042, G05B 19/409

(54) **Verfahren zum Einstellen und Anzeigen von Parametern einer Automatisierungseinrichtung**

(71) Anmelder: Siemens Aktiengesellschaft, 80333 München (DE)
(72) Erfinder: Doebrich, Udo, 76307 Karlsbad (DE); Heidel, Roland, 76870 Kandel (DE); Weber, Ingo, 76135 Karlsruhe (DE)

(57) **Zusammenfassung**

Die Erfindung betrifft ein Verfahren zum Betreiben einer Automatisierungseinrichtung (4), welche zum Steuern eines technischen Prozesses vorgesehen ist, wobei im Rahmen einer Inbetriebnahme und/oder einer Wartung der Automatisierungseinrichtung (4) für Komponenten (HK1, HK2, HK3, SK1, SK2, SK3) der Automatisierungseinrichtung (4) Parameter (Ph11, Ph12, Ph21, Ph31, Ps1, Ps2, Ps31, Ps32) eingestellt werden. Es werden Maßnahmen vorgeschlagen, wodurch im Hinblick auf Parametereinstellungen die Inbetriebnahme einer Automatisierungseinrichtung (4) und/oder die Wartung dieser Automatisierungseinrichtung (4) erleichtert werden.

## Beschreibung

Die Erfindung betrifft ein Verfahren zum Betreiben einer Automatisierungseinrichtung, welche zum Steuern eines technischen Prozesses vorgesehen ist, wobei im Rahmen einer Inbetriebnahme und/oder einer Wartung der Automatisierungseinrichtung für Komponenten der Automatisierungseinrichtung Parameter eingestellt werden. Darüber hinaus betrifft die Erfindung eine Anordnung, welche zur Durchführung des Verfahrens geeignet ist.

Ein derartiges Verfahren sowie eine derartige Anordnung ist aus dem Siemens-Katalog "ST PCS 7 - März 2009", SIMATIC PCS 7, Kapitel 2 bis 4 bekannt. Ein Prozessleitsystem zur Steuerung einer technischen Anlage weist mehrere Programmiergeräte auf, welche in einem Engineering- und/oder einem Operator-System und/oder einer Maintenance-Station eingesetzt werden. Darüber hinaus ist mindestens eines dieser Programmiergeräte derart ausgestaltet, dass mittels diesem im Rahmen einer Inbetriebnahme und/oder Wartung der Automatisierungseinrichtung eine Vielzahl von unterschiedlichen Parametern in den Hard- und/oder Softwarekomponenten der Automatisierungseinrichtung eingestellt werden. Beispielsweise parametriert ein Inbetriebsetzer die Ventilöffnungszeit oder -winkel eines Ventils, die Zykluszeit eines abzuarbeitenden Steuerprogramms, den Datenübertragungszyklus von Kommunikationskomponenten oder den Messbereich eines Sensors. Aufgrund der Vielzahl von unterschiedlichen Parametern für eine hohe Anzahl von unterschiedlichen Hard- und Softwarekomponenten einer Automatisierungseinrichtung ist es für einen Inbetriebsetzer bzw. für einen Servicetechniker schwierig, den Überblick über die aktuell erforderlichen einzustellenden und den bereits eingestellten Parameter zu behalten.

Der vorliegenden Erfindung liegt die Aufgabe zugrunde, ein Verfahren der eingangs genannten Art anzugeben, welches im Hinblick auf Parametereinstellungen die Inbetriebnahme einer Automatisierungseinrichtung und/oder die Wartung dieser Automatisierungseinrichtung erleichtert. Darüber hinaus ist eine Anordnung zur Durchführung eines derartigen Verfahrens zu schaffen.

Im Hinblick auf das Verfahren wird diese Aufgabe durch die im kennzeichnenden Teil des Anspruchs 1 und im Hinblick auf die Anordnung durch die im kennzeichnenden Teil des Anspruchs 4 angegebenen Maßnahmen gelöst.

Vorteilhaft ist die für den Inbetriebsetzer oder den Servicetechniker transparente Einstellung der Parameter. Welche Parameter während einer bestimmten Phase der Inbetriebnahme, Wartung und/oder im laufenden Betrieb geändert wurden, kann ein Anwender schnell erfassen und mit einem Blick deutlich wahrnehmen, wodurch fehlerhafte Parametereingaben erkannt werden und die Qualität des Inbetriebnahme- bzw. Wartungsprozesses verbessert wird.

Darüber hinaus kann ein Inbetriebsetzer oder ein Servicetechniker eine Beziehung unterschiedlicher Hard- und Softwarekomponenten, welche gleiche Parameter verwenden, einfach herstellen. Beispielsweise wird im Rahmen der Inbetriebnahme ein neuer oder geänderter Parameter einfach und direkt mit einer ersten Kennung versehen, die beispielsweise mittels einer Tastatur eingegeben wird, wobei ein Programm die erste Kennung dem Parameter zuordnet. Diese Kennung kann eine farbliche Markierung des Parameters oder ein Schriftbild sein, welches sich von dem Schriftbild von nicht geänderten Parametern unterscheidet. In der gleichen Art und Weise wird dem mit der ersten Kennung versehenen Parameter eine zweite Kennung zugeordnet, welche darauf hinweist, wann die erste Kennung ungültig wird. Diese zweite Kennung bzw. Markierung beschreibt z. B. die Gültigkeitsdauer eines geänderten oder eines neuen Parameters und kann ein Kalenderdatum oder eine von mehreren Inbetriebnahmephasen sein, nach welcher der Parameter seine Gültigkeit verliert. Die Zuordnung einer Kennung erfolgt nach einer Änderung eines Parameters automatisch mittels einer auf einem der Programmiergeräte ablaufenden Software, welche Änderungen an Parametern überwacht und Teil einer Engineering-, einer Bedien- und Beobachtungs-, einer Inbetriebnahme- oder Wartungs- und Diagnose-Software sein kann. Selbstverständlich kann auch das Betriebssystem dieses Programmiergerätes entsprechend ausgestaltet sein, um einem geänderten Parameter die Kennungen zuzuordnen.

Zu einem späteren Zeitpunkt können sehr einfach durch ein Suchsystem die geänderten Parameter über die Kennungen aufgefunden werden, wobei das Suchsystem die Parameter mit den ersten Kennungen ermittelt und zur Darstellung auf einer Anzeigeeinheit aufruft.

Die Kennungen können z. B. auch dazu vorgesehen werden, um zusätzliche Informationen abzuspeichern, beispielsweise um den Namen des Inbetriebsetzers zu hinterlegen, der die Einstellungen vorgenommen hat. Darüber hinaus sind die Kennungen geeignet, im Rahmen der Inbetriebnahme aufgetretene Unklarheiten zu hinterlegen, wobei diese Unklarheiten zu einem späteren Zeitpunkt analysiert werden können.

Die in den einzelnen Phasen vergebenen Kennungen können fortlaufend gespeichert werden, so dass zu jedem Zeitpunkt mittels eines Suchsystems die seinerzeit vergebenen Kennungen auffindbar und/oder abrufbar sind. Ferner sind mittels des Suchsystems sehr schnell den Kennungen zugeordnete Informationen auffindbar und/oder abrufbar, wobei auch ältere Informationen schnell wieder gefunden und mögliche Parallelen zwischen alten und neueren Informationen leichter in Verbindung gebracht werden können.

Die Erfindung ist insbesondere in einem Prozessleitsystem einsetzbar, in welchem gewöhnlich mehrere tausend Parameter auf Anzeigeeinheiten der Programmiergeräte dargestellt werden.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

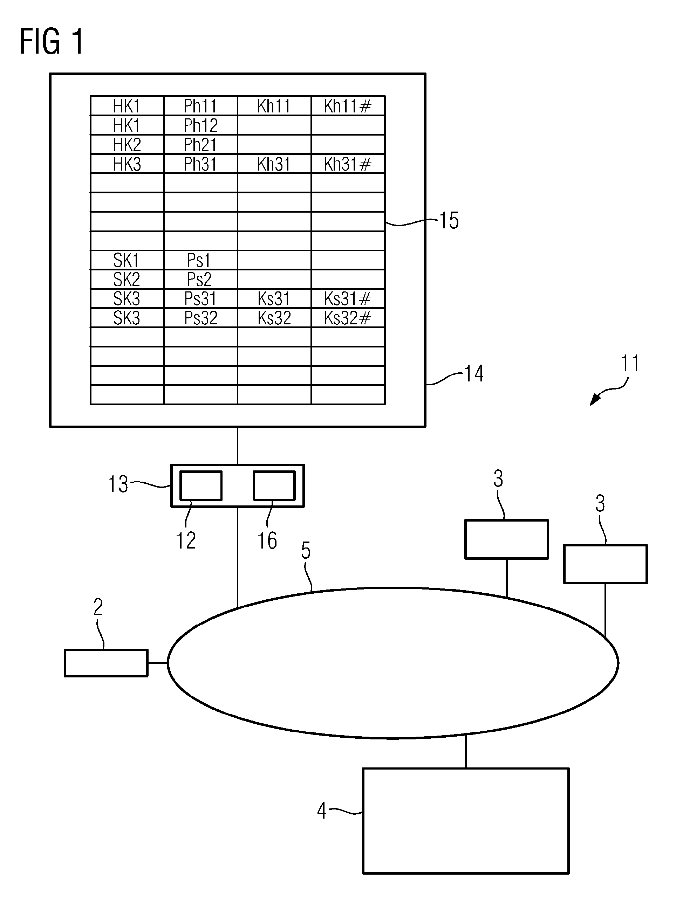

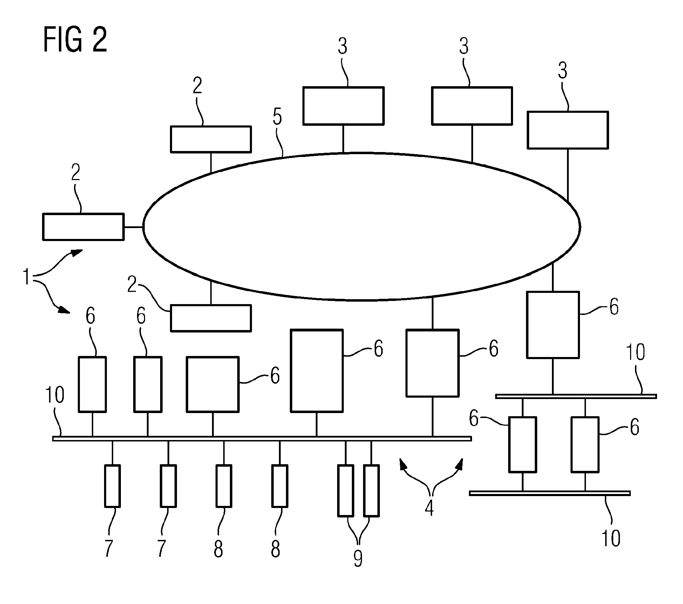

Figuren 1 und 2 ein Prozessleitsystem.

Zunächst wird auf Figur 2 verwiesen, in welcher ein an sich bekanntes Prozessleitsystem 1 dargestellt ist. Das Prozessleitsystem 1 weist ein mehrere Programmiergeräte umfassendes Engineeringsystem 2, ein mehrere Programmiergeräte umfassendes Bedien- und Beobachtungssystem 3 und eine projektierte und konfigurierte Automatisierungseinrichtung 4 auf, wobei das Engineeringsystem 2 zur Projektierung der Automatisierungseinrichtung 4 vorgesehen ist. Die Automatisierungseinrichtung 4, welche über ein Bussystem 5 und hier nicht dargestellte Busanschaltungen mit dem Engineeringsystem 2 und dem Bedien- und Beobachtungssystem 3 verbunden ist, umfasst unterschiedliche Automatisierungsgeräte 6, ferner Aktoren 7 und Sensoren 8 sowie weitere zur Steuerung einer technischen Anlage erforderliche Automatisierungskomponenten 9. Die Automatisierungsgeräte 6, welche über das Bussystem 5 und/oder weitere geeignete Bussysteme 10 miteinander verbunden sind, können unterschiedlich ausgebildet sein. So sind gewöhnlich Automatisierungsgeräte zur Lösung kleiner, mittlerer und größerer Automatisierungsaufgaben innerhalb der Automatisierungseinrichtung 4 vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind. Mit welchen Hard- und Softwarekomponenten, d. h. mit welchen Automatisierungsgeräten, Bedien- und Beobachtungsgeräten, Bussystemen, Aktoren und Sensoren, und mit welchen Projektierungs-, Inbetriebnahme- und Steuerprogrammen die Automatisierungseinrichtung 4 zu versehen ist, ist abhängig von der Komplexität der zu steuernden technischen Anlage und der Steueraufgabe, wobei die erforderlichen Hard- und Softwarekomponenten der Automatisierungseinrichtung 4 durch das Engineeringsystem 2 projektierbar und/oder konfigurierbar sind.

Die Inbetriebnahme der Automatisierungseinrichtung 4 erfolgt mittels mindestens einem der Programmiergeräte des Engineeringsystems 2 und/oder des Bedien- und Beobachtungssystems 3 und/oder eines weiteren hier an das Bussystem angeschlossenen Programmiergerätes, welches mit einer dazu geeigneten Inbetriebnahme-Software versehen ist, wobei das Programmiergerät eine weitere Parameteränderung-Erkennungs-Software aufweist. Diese Parameteränderung-Erkennungs-Software kann selbstverständlich Bestandteil dieser Inbetriebnahme-Software sein.

Im Folgenden wird auf Figur 1 verwiesen, in welcher ein weiteres mit 11 bezeichnetes Prozessleitsystem dargestellt ist. Die in den Figuren 1 und 2 gleichen Teile sind mit gleichen Bezugszeichen versehen. Das Prozessleitsystem 11 weist ein mit einer Inbetriebnahme-Software 12 versehenes Programmiergerät 13 auf, wobei diese Inbetriebnahme-Software 12 ferner derart ausgebildet ist, dass durch einen Inbetriebsetzer geänderte oder neu hinzugefügte Parameter von Hard- und/oder Softwarekomponenten erkannt und automatisch mit einer ersten Kennung gekennzeichnet bzw. markiert werden. Darüber hinaus ist die Inbetriebnahme-Software 12 derart ausgebildet, die neu hinzugefügten bzw. geänderten Parameter auf einer Anzeigeeinheit 14 des Programmiergerätes 13 gekennzeichnet bzw. markiert darzustellen, wodurch der Inbetriebsetzer schnell erkennen kann, welche Parameter neu hinzugefügt oder geändert wurden. Selbstverständlich kann ein weiterer Inbetriebsetzer z. B. mittels eines weiteren Programmiergerätes über den Bus 5 auf die Inbetriebnahme-Software 12 zugreifen, um die geänderten Parameter visuell zu erfassen. Im vorliegenden Ausführungsbeispiel sind in einer Tabelle 15 Hardwarekomponenten HK1, HK2, HK3, ... mit dazugehörigen Parametern Ph11, Ph12, Ph21, Ph31, ... und Softwarekomponenten SK1, SK2, SK3, ... mit dazugehörigen Parametern Ps1, Ps2, Ps31, Ps32, ... dargestellt, wobei die Parameter Ph11, Ph31 der Hardwarekomponenten HK1, HK3 sowie die Parameter Ps31, Ps32 der Softwarekomponente SK3 durch den Inbetriebsetzer geändert wurden. Auf diese geänderten Parameter weisen diesen Parametern zugeordnete Kennungen Kh11, Kh31 sowie Ks31, Ks32 hin. Anstatt diese Kennungen Kh11, Kh31 sowie Ks31, Ks32 anzuzeigen, ist es selbstverständlich möglich, die Parameter Ph11, Ph31 und Ps31, Ps32 farblich zu markieren oder ein Schriftbild zu nutzen, welches sich von einem Schriftbild der nicht geänderten Parameter unterscheidet. Auch ist es möglich, die neuen und/oder geänderten Parameter in einem separaten Fenster der Anzeigeeinheit darzustellen, wodurch auf einen Blick diese Parameter visuell erfasst werden können. Für den Fall, dass der Inbetriebsetzer einen neuen Parameter hinzufügt oder einen bereits hinzugefügten Parameter ändert, blendet die Inbetriebnahme-Software 12 auf der Anzeigeeinheit 14 ein hier nicht dargestelltes Eingabefeld ein, in welchem der Inbetriebsetzer einem geänderten Parameter eine zweite Kennung zuordnen kann. Diese zweite Kennung weist auf die Gültigkeitsdauer des geänderten oder des neuen Parameters hin und kann z. B. ein Verfallsdatum der ersten Kennung oder eine Inbetriebnahmephase sein, nach welcher der geänderte oder neue Parameter seine Gültigkeit verliert. Im vorliegenden Ausführungsbeispiel ist dem geänderten bzw. neu hinzugefügten Parameter Ph11 eine zweite Kennung Kh11# und dem Parameter Ph31 eine zweite Kennung Kh31#, dem Parameter Ps31 eine zweite Kennung Ks31# zugeordnet. Die geänderten bzw. die neu hinzugefügten Parameter der Hard- und Softwarekomponenten mit den dazugehörigen ersten und zweiten Kennungen hinterlegt die Inbetriebnahme-Software 12 in einem Speicher des Programmiergerätes 14, um diese Parameter zu einem späteren Zeitpunkt, z. B. nach Abschluss der Inbetriebnahme, auffinden und gegebenenfalls analysieren zu können. Zum Auffinden dieser Parameter ist die Inbetriebnahme-Software 12 mit einem Suchsystem 16 versehen, welches anhand der ersten Kennungen die im Rahmen der unterschiedlichen Inbetriebnahmephasen geänderten Parameter ermittelt und diese auf der Anzeigeeinheit 14 oder auf einer Anzeigeeinheit eines weiteren an dem Bus 5 angeschlossenen Programmiergeräts darstellt. Das Suchsystem 16 kann ebenfalls Bestandteil der Inbetriebnahme-Software 12 sein.

## Patentansprüche

1. Verfahren zum Betreiben einer Automatisierungseinrichtung (4), welche zum Steuern eines technischen Prozesses vorgesehen ist, wobei im Rahmen einer Inbetriebnahme und/oder einer Wartung der Automatisierungseinrichtung (4) für Komponenten (HK1, HK2, HK3, SK1, SK2, SK3) der Automatisierungseinrichtung (4) Parameter (Ph11, Ph12, Ph21, Ph31, Ps1, Ps2, Ps31, Ps32) eingestellt werden, **gekennzeichnet durch** folgende Schritte:
- Zuordnen einer ersten Kennung (Kh11, Kh31, Ks31, Ks32) zu mindestens einem neuen oder geänderten Parameter (Ph11, Ph31, Ps31, Ps32),
- Zuordnen einer zweiten Kennung (Kh11#, Kh31#, Ks31#, Ks32#) zu diesem Parameter (Ph11, Ph31, Ps31, Ps32), wobei die zweite Kennung (Kh11#, Kh31#, Ks31#, Ks32#) darauf hinweist, wann die erste Kennung (Kh11, Kh31, Ks31, Ks32) ungültig wird,
- Anzeigen des Parameters (Ph11, Ph31, Ps31, Ps32) und mindestens der ersten Kennung (Kh11, Kh31, Ks31, Ks32) auf einer Anzeigeeinheit (14).

2. Verfahren nach Anspruch 1, **dadurch gekennzeichnet, dass** mittels eines Suchsystems (16) die erste oder zweite Kennung und/oder der Parameter (Ph11, Ph31, Ps31, Ps32) über die erste Kennung (Kh11, Kh31, Ks31, Ks32) auffindbar ist.

3. Verfahren nach Anspruch 1 oder 2, **dadurch gekennzeichnet, dass** die erste und/oder zweite Kennung (Kh11, Kh31, Ks31, Ks32, Kh11#, Kh31#, Ks31#, Ks32#) ein menschenlesbarer Begriff ist.

4. Anordnung mit einem Programmiergerät (13) und einer Automatisierungseinrichtung (4), welche zum Steuern eines technischen Prozesses vorgesehen ist, wobei mittels dem Programmiergerät (13) im Rahmen einer Inbetriebnahme und/oder einer Wartung der Automatisierungseinrichtung (4) für Komponenten (HK1, HK2, HK3, SK1, SK2, SK3) der Automatisierungseinrichtung (4) Parameter (Ph11, Ph12, Ph21, Ph31, Ps1, Ps2, Ps31, Ps32) einstellbar sind, **dadurch gekennzeichnet, dass** das Programmiergerät (13) oder ein weiteres Programmiergerät dazu ausgebildet ist,
- einem neuen und/oder einem geänderten Parameter (Ph11, Ph31, Ps31, Ps32) eine erste Kennung (Kh11, Kh31, Ks31, Ks32) zuzuordnen,
- dem mit der ersten Kennung (Kh11, Kh31, Ks31, Ks32) **gekennzeichnet**en Parameter (Ph11, Ph31, Ps31, Ps32) eine zweite Kennung (Kh11#, Kh31#, Ks31#, Ks32#) zuzuordnen, welche darauf hinweist, wann die erste Kennung (Kh11, Kh31, Ks31, Ks32) ungültig wird,
- den Parameter (Ph11, Ph31, Ps31, Ps32) und mindestens die erste Kennung (Kh11, Kh31, Ks31, Ks32) auf einer Anzeigeeinheit (14) darzustellen.

5. Anordnung nach Anspruch 4, **dadurch gekennzeichnet, dass** das Programmiergerät (13) oder ein weiteres Programmiergerät mit einem Suchsystem versehen ist, welches dazu ausgebildet ist, die erste und/oder zweite Kennung und/oder den Parameter (Ph11, Ph31, Ps31, Ps32) über die erste Kennung (Kh11, Kh31, Ks31, Ks32) aufzufinden.

6. Anordnung nach Anspruch 4 oder 5, **dadurch gekennzeichnet, dass** die erste und/oder zweite Kennung (Kh11, Kh31, Ks31, Ks32, Kh11#, Kh31#, Ks31#, Ks32#) ein menschenlesbarer Begriff ist.
